# EUROPEAN PATENT SPECIFICATION

(11) **EP 2 168 852 B1**
(45) Date of publication and mention of the grant of the patent: **24.10.2012**
(21) Application number: 09170994.9
(22) Date of filing: 22.09.2009
(51) Int. Cl.: B62J 6/02, B62J 17/02, B62J 17/04

(54) **Saddle-type vehicle**
Sattelfahrzeug
Véhicule de type à enfourcher

(30) Priority: 30.09.2008 JP 2008255336
(43) Date of publication of application: 31.03.2010
(73) Proprietor: Honda Motor Co., Ltd., Tokyo 107-8556 (JP)
(72) Inventor: Tsuji, Ayumu, Saitama 351-0193 (JP); Kitayama, Kyosuke, Saitama 351-0193 (JP)
(74) Representative: Ilgart, Jean-Christophe

(56) References cited:
- JP-A- 8 053 088
- JP-A- 11 020 761
- JP-A- 2006 062 553
- US-A1- 2007 236 949

## Description

### [Technical Field]

The present invention relates to a saddle-type vehicle.

### [Background Art]

As a saddle-type vehicle, a motorcycle having a front cowl and a headlight arranged at an opening provided on the front cowl is well known (for example, see Patent Document 1). The vehicle in Patent Document 1 has a structure in which the headlight is mounted on a cover member and the cover member is mounted on a fearing, and is simplified in molding process by providing air holes on both left and right sides of the cover member to facilitate a bulb replacement work and eliminate necessity of formation of a fairing air hole.
[Patent Document 1] JP-B-02-43676

Document US 2007/236 959 discloses a paddle-type vehicle according to the preamble of claim 1.

Documents JP 2006 062 553 and JP 11 020 761 also disclose a relevant prior art.

### [Disclosure of Invention]

### [Problems to be Solved by the Invention]

However, in the configuration in the related art, since the headlight is mounted on the cover member and the cover member is mounted on the fairing, if the headlight is upsized in order to attain a light emitting surface area of the headlight, the cover member provided with the air holes and the fairing are upsized. Upsizing of these members tend to cause complication in structure and increase in number of components by increase of mounting positions of the respective members.

In view of such circumstances as described above, it is an object of the present invention to provide a saddle-type vehicle which easily achieves downsizing of a front cowl formed with air inlet ports while attaining a light-emitting surface area.

### [Means for Solving the Problems]

In order to solve the above-described problems, the present invention provides a saddle-type vehicle including the features of claim 1.

In the configuration as described above, a configuration in which a projection formed by causing a center of an upper side of the opening to project downward is provided, the front cowl extends toward the projection, and a light emitting area of the headlight is formed along the projection is also applicable.

In the configuration as described above, since side covers to be mounted on left and right sides of the front cowl are provided, the front cowl includes flanges bent rearward on the left and right sides positioned outsides the air inlet ports, and mounting portions configured to allow the side covers to be mounted thereon are provided on the respective flanges, the side covers may be mounted on the front cowl while attaining the cover strength around the air inlet ports sufficiently.
In the configuration as described above, the air inlet ports each may be provided with a plurality of louvers extending in the lateral direction. In this configuration, improvement of the rectifying effect of the traveling wind is achieved.

### [Advantage of the Invention]

In the present invention, since the front cowl integrally includes the shielding portion which introduces the traveling wind rearward and upward, the number of components may be reduced. Since the air inlet ports are arranged along the recesses formed by depressing the lower portions of the both left and right sides of the opening inward, downsizing of the front cowl provided with the air inlet ports while attaining the light-emitting surface area of the headlight is easily achieved.
Since the projection formed by causing the center of the upper side of the opening to project downward is provided, the front cowl extends toward the projection, and the light emitting area of the headlight is formed along the projection, improvement of the strength of the entire front cowl provided with the air inlet ports is achieved while attaining the light-emitting surface area.
Also, since the air inlet ports are provided within the widths between the ends of the upper sides and the ends of the lower sides of the opening in front view, the headlight and the air introducing ports may be arranged together within the width of the upper side of the opening, so that upsizing of the front cowl in the direction of the lateral width of the front cowl may be restrained.
Since the shoulder is provided on the surface extending from the upper side of the opening to the shielding portion, improvement of the strength of the front cowl is achieved.
Also, since the side covers to be mounted on the left and right sides of the front cowl are provided, the front cowl includes the flanges bent rearward on the left and right sides positioned outsides the air inlet ports, and the mounting portions configured to allow the side covers to be mounted thereon are provided on the flanges, the side covers may be mounted on the front cowl while attaining the cover strength around the air inlet ports sufficiently.
Since the air inlet ports each are provided with the plurality of louvers extending in the lateral direction, improvement of the rectifying effect of the traveling wind is achieved.

### [Brief Description of the Drawings]

[Fig. 1] Fig. 1 is a left side view of a scooter-type vehicle according to a first embodiment of a saddle type-vehicle in the present invention.
[Fig. 2] Fig. 2 is a drawing of the scooter-type vehicle viewed from above.
[Fig. 3] Fig. 3 is a left side view of the scooter-type vehicle including a vehicle body cover.
[Fig. 4] Fig. 4 is a perspective view showing a front cowl together with the headlight.
[Fig. 5] Fig. 5 is a front view showing a front cowl together with a headlight.
[Fig. 6] Fig. 6 is a side view showing a front cowl together with the headlight.
[Fig. 7] Fig. 7 is a side view of the front cowl in a state in which the headlight is removed.

### [Best Modes for Carrying Out the Invention]

Referring now to the attached drawings, embodiments of the present invention will be described. The directions such as front, rear, left, right, and up and down in the description below represent directions viewed from an occupant riding on a vehicle body.

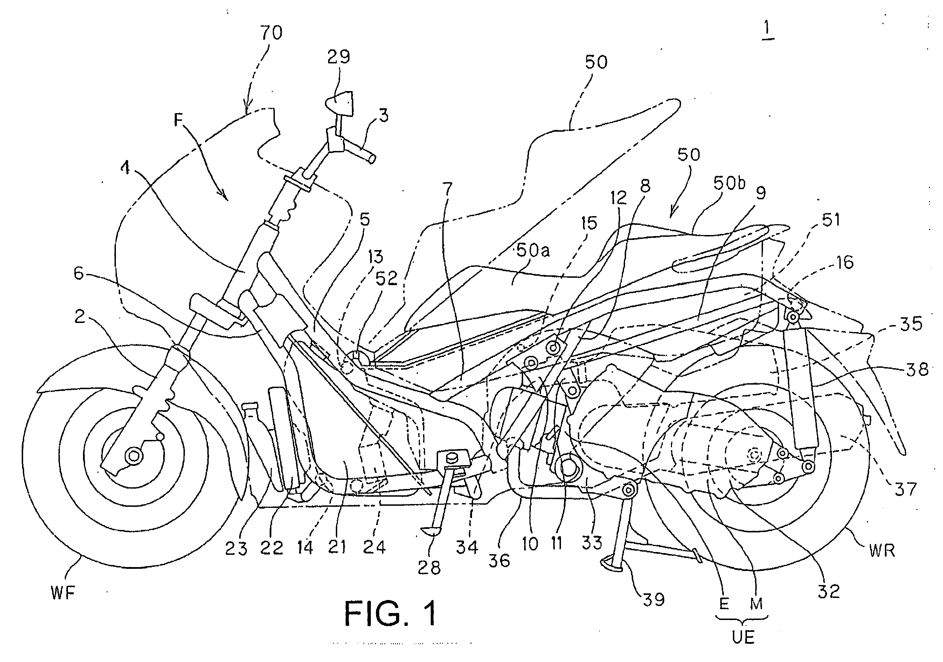

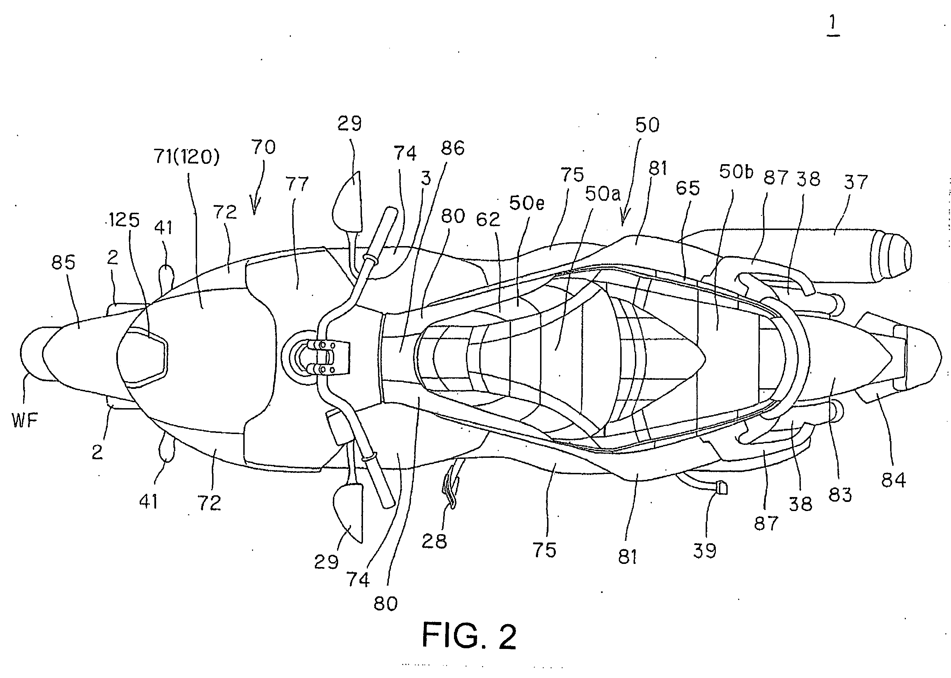

Fig. 1 is a left side view of a scooter-type motorcycle according to an embodiment of a saddle-type vehicle in the present invention, and Fig. 2 is a drawing of the same viewed from above. For the convenience of description, a vehicle body cover 70 is shown by an imaginary line (double-dashed chain line) in Fig. 1.
A vehicle body frame F of a scooter-type motorcycle (referred to as a scooter-type vehicle) 1 includes a front fork 2 configured to support a front wheel WF and a head pipe 4 configured to support a steering handle 3 to be joined to the front fork 2 so as to be steered freely at a front end thereof. A unit swing engine UE configured to support a rear wheel WR at a rear end thereof is supported at a midsection in the fore-and-aft direction in terms of the vehicle body frame F so as to be swingable in the vertical direction.
A seat 50 for the occupant is provided above the unit swing engine UE via a hinged portion 52 so as to be openable and closable. The vehicle body frame F is further provided with the synthetic resin-made vehicle body cover 70 mounted thereon so as to cover the vehicle body frame F.

The vehicle body frame F includes the head pipe 4, a pair of left and right main frames 5 continuing from an upper portion of the head pipe 4 and extending rearward and downward, and a pair of left and right down frames 6 continuing from a lower portion of the head pipe 4, extending rearward and downward, then extending substantially downward, and finally extending rearward and being connected to rear ends of the main frames 5. The vehicle body frame F further includes a pair of left and right seat rails (also referred to as rear frames) 7 extending from midsections of the both main frames 5 rearward and upward to a rear portion of the vehicle, a pair of left and right middle frames 8 connecting the rear ends of the both main frames 5 and midsections of the seat rails 7, and a pair of left and right rear sub frames 9 connecting rear portions of the both middle frames 8 and rear ends of the seat rails 7.

A fuel tank 21 is arranged in a space surrounded by the left and right main frames 5 and the left and right down frames 6. A first cross member 13 is bridged between the left and right main frames 5 above the fuel tank 21, and a second cross member 14 is bridged between the left and right down frames 6 below the fuel tank 21. A third cross member 15 is bridged between the left and right seat rails 7 above the unit swing engine UE, and a fourth cross member 16 is bridged between the rear ends of the left and right seat rails 7.

A pair of left and right pivot plates 10 are bridged between the seat rails 7 and the middle frames 8. A pivot shaft 12 configured to support the unit swing engine UE so as to be swingable is provided between the left and right pivot plates 10 via a link member 11.

The unit swing engine UE includes a water-cooled engine E having a cylinder axial line extending substantially horizontally, and a belt-type continuously variable transmission M configured to steplessly vary an output from the engine E and transmit the same to the rear wheel WR via a transmission belt and a pulley. The continuously variable transmission M drives a movable pulley on the side of a crankshaft according to the operation of an electric motor (not shown) as an actuator for varying the speed and steplessly varies the change gear ratio. A transmission case 32 of the variable transmission M is formed continuously on the left side of a crank case 33 of the engine E so as to protrude from the engine E, and extends to the left side of the rear wheel WR. An air cleaner unit 35 is connected to an upper portion of the engine E via a throttle body 34, and an exhaust pipe 36 extending rearward of the vehicle is connected to a lower portion of the engine E. A muffler 37 is connected to a rear end of the exhaust pipe 36.

A pair of left and right rear cushion units 38 are provided between both side surface portions of the rear end of the unit swing engine UE and the rear ends of the left and right seat rails 7. As described above, the unit swing engine UE is supported by the pivot shaft 12 and is provided with the rear cushion units 38 at a rear end portion thereof, and hence has a function as a swing arm configured to swingably support the rear wheel WR in addition to a function as a power unit.
A main stand 39 is mounted on a lower portion of the unit swing engine UE. A side stand 28 is mounted on the left down frame 6.

A radiator 22 for cooling a coolant of the engine E is provided behind the front wheel WF and in front of the down frames 6, and a reservoir tank 23 for the coolant described above is provided in the vicinity of the radiator 22.
A fuel pump 24 for supplying fuel to the throttle body 34 is provided in the interior of the fuel tank 21.

A storage box 51 which allows storage of a baggage such as a helmet for the occupant is provided between the left and right main frames 5 and between the left and right seat rails 7. The storage box 51 is provided so as to be bridged between the left and right seat rails 7, and extends from above the fuel tank 21 to a position above the unit swing engine UE.
The seat 50 is provided above the storage box 51 so as to extend along the seat rail 7, and includes a front seat portion 50a on which an operator is seated and a rear seat portion 50b on which a passenger is seated.

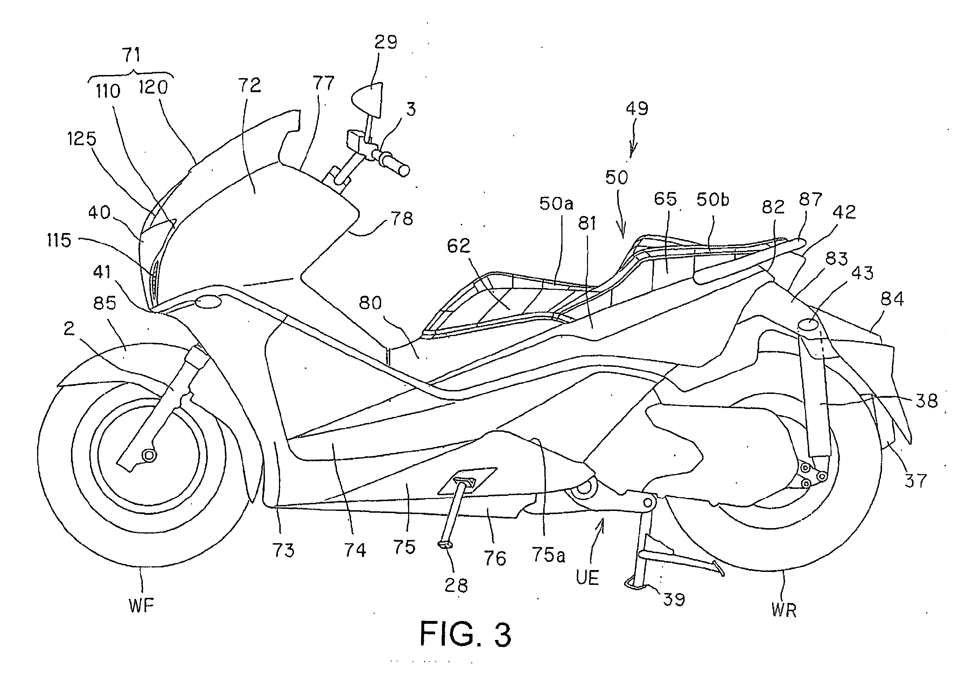

Fig. 3 is a left side view of the scooter-type vehicle 1 including the vehicle body cover 70. Referring now to Fig. 2 and Fig. 3, the vehicle body cover 70 and so on will be described.
The vehicle body cover 70 includes a front cover (front cowl) 71 configured to cover a front surface of the saddle-type vehicle 1 in front of the head pipe 4, a pair of left and right upper side covers (side covers) 72 joined to both left and right sides of the front cover 71 and configured to cover lateral sides of a front portion of the vehicle, a pair of left and right lower side covers (side covers) 73 joined to lower portions of the upper side covers 72 and configured to cover a lower portion of the front portion of the vehicle and to cover the forward of the leg portions of the driver seated on the front seat portion 50a to serve also as a leg shield, a pair of left and right floor steps 74 being joined to the upper side covers 72 and the lower side covers 73 and extending rearward, a pair of left and right floor skirts 75 configured to be joined to lower portions of the floor steps 74, and an undercover 76 configured to cover a lower surface of a center of the vehicle.
The vehicle body cover 70 includes a meter panel cover 77 configured to cover the head pipe 4 from above and an inner cover 78 configured to be joined to the left and right upper side covers 72 so as to cover the head pipe 4 from behind. The inner cover 78 is provided with a console box 79 as a storage space. A pair of left and right tandem steps 75a configured to allow the passenger seated on the rear seat portion 50b to place his or her feet thereon are provided at a rear portion of the floor skirts 75.

The body cover 70 further includes a pair of left and right seat lower covers 80 provided below the front seat portion 50a, a seat hinge cover 86 (see Fig. 2) provided between the left and right seat lower covers 80, a pair of left and right body covers 81 extending along the seat rails 7 to cover lateral surfaces of the vehicle, a rear body cover 82 joined to rear ends of the body covers 81 for covering the rear portion of the vehicle, and a body cover skirt 83 extending rearward and downward from the rear ends of the body covers 81. A rear fender 84 configured to cover the rear wheel WR from behind is mounted on an end of the body cover skirt 83. Separate left and right grab rails 87 are mounted on the left and right of the rear seat portion 50b. The passenger seated on the rear seat portion 50b is able to support his or her body by grabbing the grab rails 87.

A front fender 85 configured to cover the front wheel WF from above is fixed to the front fork 2. The steering handle 3 is provided with a pair of left and right back mirrors 29 and a switch case (not shown) for operating a light unit or the like. A headlight 40 is provided in front of the front cover 71, and a pair of left and right front direction indicators 41 are provided on the lower side covers 73 positioned rearward of the headlight 40. A tail lamp 42 is provided at a rear end of the rear body cover 82 and a pair of left and right rear direction indicators 43 are provided at the left and right of the rear end of the body cover skirt 83.
The scooter-type vehicle here is a vehicle included in a saddle-type vehicle which allows the occupant to straddle the seat 50 generally including low floor portions which allow the occupant to place his or her feet such as floor steps 74, and including the unit swing engine UE. In recent years, scooter-type vehicles provided with a frame mount engine instead of the unit swing engine UE are also provided.

Subsequently, the front structure of the scooter-type vehicle 1 will be described in detail.

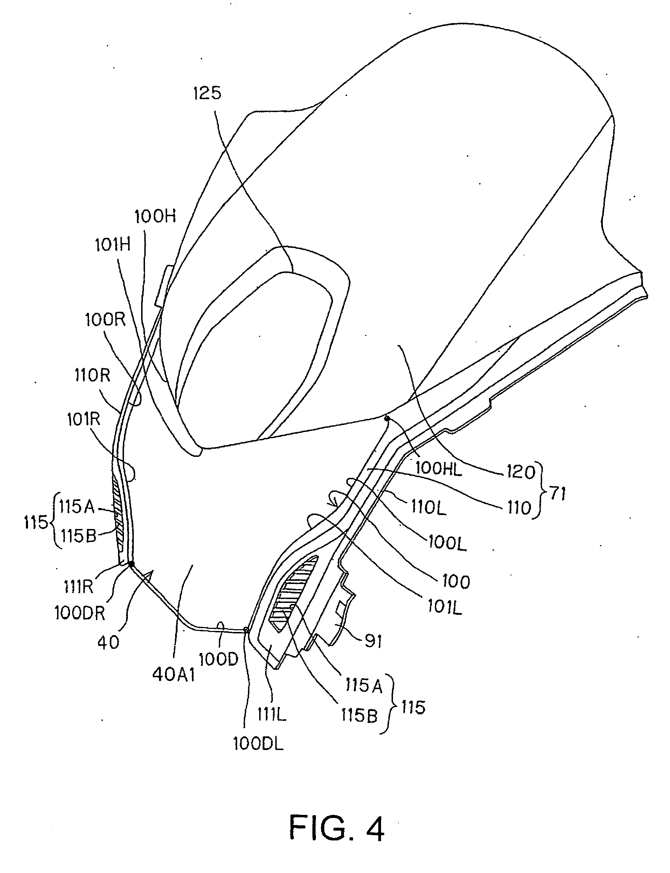

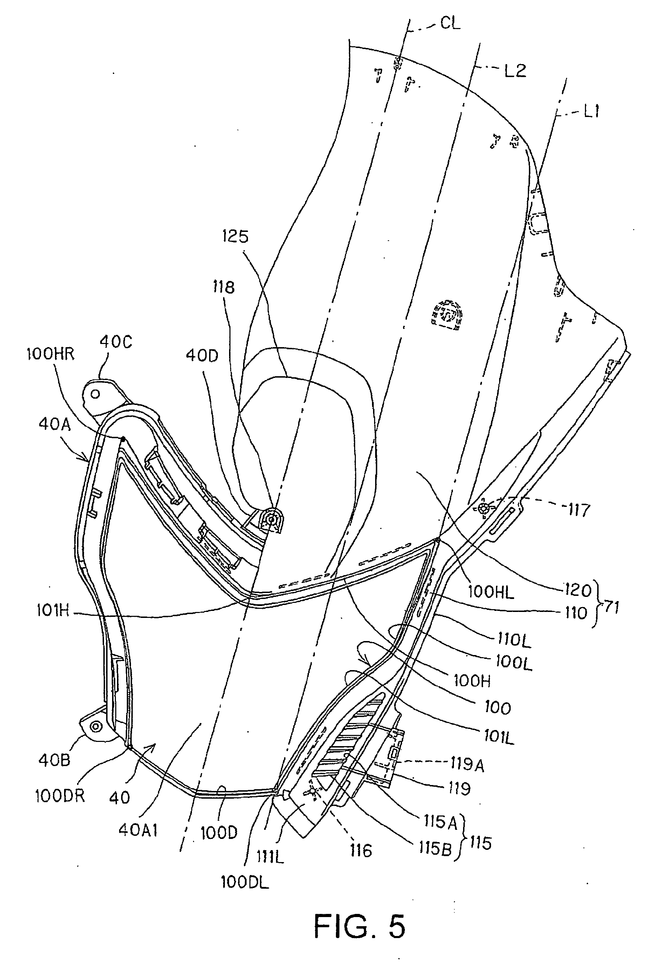

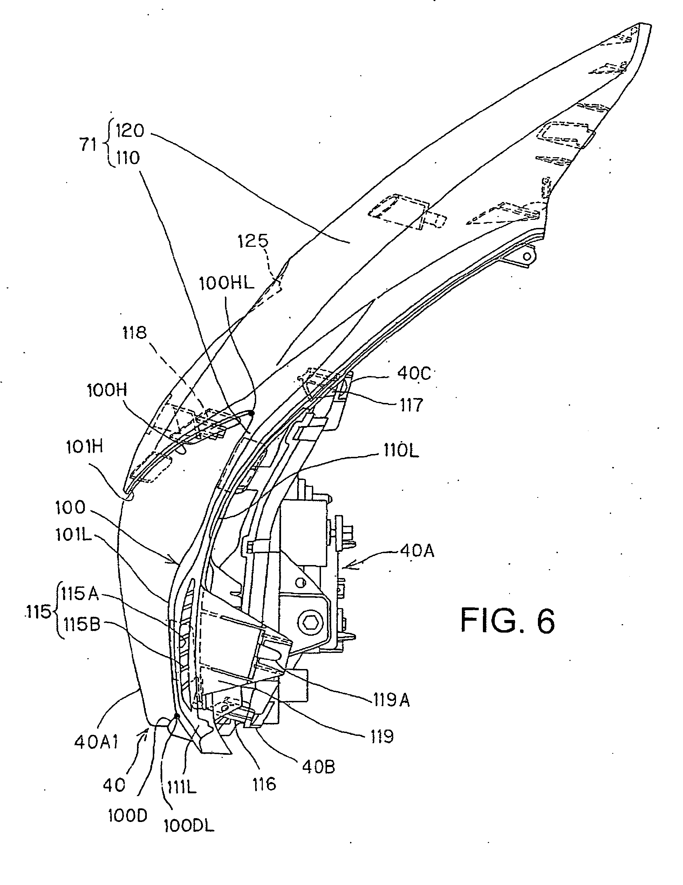

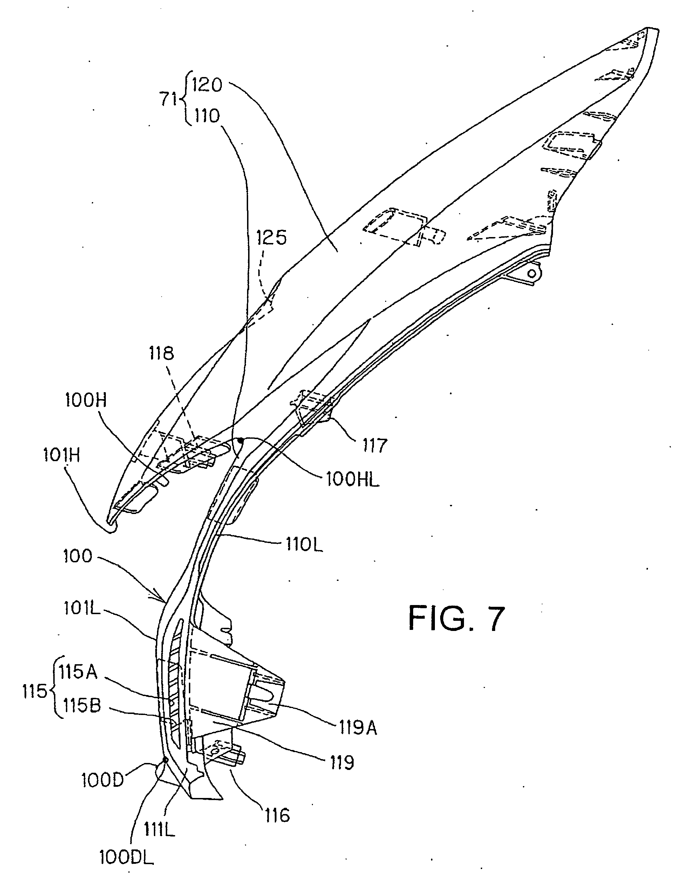

Fig. 4 is a perspective view showing the front cover 71 together with the headlight 40; Fig. 5 is a front view of the same, and Fig. 6 is a side view of the same. Fig. 7 is a side view of the front cover 71 in a state in which the headlight 40 is removed. In Fig. 4, a centerline CL extending in the fore-and-aft direction at a widthwise center of the vehicle body is shown.
The front cover 71 is fixed to the vehicle body frame F of the head pipe 4 via a bracket, not shown, and functions as a cover which covers a front portion of the vehicle body frame F.
As shown in Fig. 2 to Fig. 4, the front cover 71 is roughly formed into a cover shape which is inclined upward toward the rear when viewing the vehicle from the side, and curved into a shape protruding forward of the vehicle in top view and, as shown in Fig. 4, integrally includes a light mounting side cover portion 110 having an opening 100 in which the headlight 40 is mounted and a shield cover (shield portion) 120 configured to guide the traveling wind from the front of the vehicle toward the upper rear.
As shown in Fig. 5, the front cover 71 is formed into a cover shape which is gradually decreased in width as it goes downward in a front view of the vehicle, that is, the light mounting side cover portion 110 is formed to have a narrower width than the shield cover 120, so that the front projecting surface area is reduced as it goes downward of the front cover 71 to reduce air resistance, while the front projecting surface area is increased as it goes upward to reduce the amount of traveling wind which is directed toward the upper half body of the occupant adequately.

The opening 100 of the light mounting side cover portion 110 has a laterally symmetrical shape. In Fig. 5, the left side of the light mounting side cover portion 110 in terms of the vehicle is mainly shown, and a light unit 40A of the headlight 40 is shown on the right side of the vehicle.
The light mounting side cover portion 110 is formed into a frame-like cover extending along a left side 100L, a right side 100R, an upper side 100H, and a lower side 100D of the opening 100 as shown in Fig. 4 and Fig. 5.
In contrast, lower portions of the both left and right sides 100L, 100R of the opening 100 are formed into a recessed shape recessed toward the center (inward) in the widthwise direction of the vehicle. More specifically, the recessed portions (hereinafter, referred to as recesses 101L, 101R) have a shape significantly recessed toward the center (inward) in the widthwise direction of the vehicle in comparison with the curves extending along the both left and right sides 110L, 110R of the light mounting side cover portion 110.
Accordingly, wide and elongated cover portions (hereinafter, referred to as cover portions beside the light) 111L, 111R may be formed on the left and right of the lower side of the opening 100 while enlarging the maximum width of the opening 100 to a value close to the entire width of the light mounting side cover portion 110.

The cover portions 111L, 111R beside the light each are formed integrally with air inlet ports 115 which introduce the traveling wind from the front of the vehicle to the inside of the front cover 71. Therefore, the left and right air inlet ports 115 are positioned inwardly in the widthwise direction (on the side of the centerline CL) of the vehicle with respect to lines L1 which extend vertically of the vehicle body from both ends of the upper side 100H of the opening 100 (the position at the left end of the upper side is designated by a reference sign 100HL, and the position at the right end of the upper side is designated by a reference sign 100 HR), and are positioned outwardly in the widthwise direction of the vehicle with respect to lines L2 which extend vertically of the vehicle body from both ends of the lower side 100D of the opening 100 (the position at the left end of the lower side is designated by a reference sign 100DL, and the position at the right end of the lower side is designated by a reference sign 100DR) in the front view of the vehicle as shown in Fig. 5.
In other words, the left and right air inlet ports 115 are provided within widths between the end of the upper side 100H and the end of the lower side 100D of the opening 100 in the front view of the vehicle, whereby the headlight 40 and the left and right air inlet ports 115 may be arranged together in the width of the upper side 100H of the opening 100.
Also, the left and right air inlet ports 115 are provided within a width between the end of the upper side 100H and the end of the lower side 100D of the opening 100 also in a side view of the vehicle as shown in Fig. 6, and the headlight 40 and the left and right air inlet ports 115 may be arranged together in the side view of the vehicle as well.

Headlight mounting portions 116 for screwing left and right mounting stays 40B extending from the left and right of the lower side of the light unit 40A of the headlight 40 are integrally formed with the cover portions 111L, 111R beside the light. As shown in the same drawing, a pair of left and right mounting stays 40C and 40D are provided on the left and right on the upper side and the center on the upper side of the light unit 40A of the headlight 40, and headlight mounting portions 117, 118 for screwing the mounting stays 40C and 40D are integrally formed with the front cover 71.
In addition, as shown in Fig. 5 and Fig. 6, a pair of left and right flanges 119 bent rearward are formed on the outsides of the both left and right lateral sides 110L, 110R corresponding to outsides of the cover portions 111L, 111R beside the light integrally therewith and the flanges 119 each are provided with a side cover mounting portion 119A configured to allow the upper side cover 72 to be mounted thereon with a mounting member such as a screw.
In this case, since the flanges 119 are provided outsides the left and right air inlet ports 115, the section modulus of portions in the peripheries of the air inlet ports 115 on the light mounting side cover portion 110 is increased, so that the cover strength around the air inlet ports 115 may be sufficiently ensured.

As shown in Fig. 5, the air inlet ports 115 are formed along the recesses 101L, 101R formed by depressing the lower portions of the both left and right sides 100L, 100R of the opening 100 inward in the areas of the cover portions 111L, 111R beside the light and, more specifically, include inverted V-shaped opening holes 115A increasing gradually in width as it goes downward, a plurality of louvers (also referred to as wind direction adjusting plates) 115B extending in the lateral directions and provided in the opening holes 115A at intervals in the vertical direction.
The traveling wind may be rectified by the plurality of louvers 115B when introducing the traveling wind from the front of the vehicle to the inside of the front cover 71, and the wind direction may be adjusted inside the front cover 71. For example, at least part of the traveling wind introduced to the inside of the front cover 71 is adapted to be blown out to a space between the shield cover 120 and the driver, whereby the space between the shield cover 120 and the driver is prevented from having a negative pressure. Also, an adequate amount of traveling wind may be provided to the occupant by allowing part of the traveling wind introduced to the inside of the front cover 71 to flow toward the occupant. The direction of the plurality of louvers 115B are not limited to the same direction, and may be varies depending on the part as a matter of course.

The upper side 100H of the opening 100 of the light mounting side cover portion 110 has a projecting shape projecting in a V-shape downward of the center in the direction widthwise of the vehicle, and the light mounting side cover portion 110 and the shield cover 120 extend toward the projecting portion (hereinafter, referred to as a projection 101H). The front cover 71 is also formed with a shoulder portion 125 depressing downward on a front surface portion extending from the upper side 100H of the opening 100 to the shield cover 120. The shoulder portion 125 functions as a rectifying groove for the traveling wind flowing along the front cover 71 (including the front surface of the headlight 40). In addition, since the section modulus of the front cover 71 may be increased by the shoulder portion 125, improvement of the strength of the front cover 71 is achieved.

The headlight 40 includes a headlight cover 40A1 mounted on a front surface of the light unit 40A, and the headlight cover 40A1 has a shape substantially matching an opening shape of the opening 100, so that the headlight 40 fits the opening 100 with little clearance to form a curved surface which continues to the front surface of the front cover 71. In other words, the headlight 40 is recessed toward the center in the widthwise direction of the vehicle (inward) along the recesses 101L, 101R formed on the left and right lower portions of the opening 100, and the air inlet ports 115 are arranged outsides of the recessed portion in the widthwise direction of the vehicle. Accordingly, the entire opening 100 may be used as a light emitting area of the headlight 40, and the air inlet ports 115 may be arranged on the left and right of the headlight 40 while enlarging the maximum width of the light-emitting area to a substantially entire width of the light mounting side cover portion 110 which defines the front surface of the vehicle body cover 70.
When the air inlet ports 115 are arranged on the left and right of the headlight 40, since the air inlet ports 115 are positioned so as to face front at the front end of the front cover 71, the traveling wind may be efficiently introduced to the inside of the front cover 71, and the traveling wind may be introduced efficiently toward a space between the front cover 71 and the operator, or a position desired by the operator. Since the traveling wind is allowed to flow the lateral sides of the headlight 40 and the light unit 40A, the heat generated by a light source in the interior of the light unit 40A may be efficiently cooled.

As described thus far, according to this embodiment, since the front cover 71 is integrally provided with the shield cover (shield portion) 120 which introduces the traveling wind backward and upward, and the air inlet ports 115 are arranged along the recesses 101L, 101R formed by depressing the lower portions of the both left and right sides 100L, 100R of the opening 100 disposed with the headlight 40 inward, the air inlet ports 115 may be arranged on the left and right of the headlight 40 while securing the light-emitting surface area by increasing the width of the headlight 40. Therefore, downsizing (width reduction, for example) of the front cover 71 is easily achieved, and the flexibility in shape of the front cover 71 may be improved.
In this configuration, since the center of the upper side 100H of the opening 100 is projected downward, the front cover 71 extends toward the projected projection 101H, and the light-emitting area of the headlight 40 are formed along the projection 101H, the further enhancement of the strength of the entire front cover 71 is achieved by the case in which the opening 100 is formed into a simple square while attaining the light-emitting surface area.

In addition, since the air inlet ports 115 are provided within a width (between the lines L1 and L2 in Fig. 5) between the ends of the upper sides 100H of the opening 100 (the ends of the upper sides of the headlight 40) and the ends of the lower sides 100D (the ends of the lower sides of the headlight 40) in front view, the headlight 40 and the air inlet port 115 may be arranged together within the width of the upper side 100H of the opening 100, so that upsizing in the direction of the lateral width of the front cover 71 may be restrained.
Also, since the shoulder portion 125 is provided on the surface extending from the upper side 100H of the opening 100 to the shield cover 120, the section modulus of the front cover 71 is increased by the shoulder portion 125, and improvement of the strength of the front cover 71 is achieved.
Also, since the front cover 71 is provided with the flanges 119 bent rearward on the both left and right sides 110L, 110R positioned outsides the air inlet ports 115 and the flanges 119 each are provided with the side cover mounting portion 119A configured to allow the upper side cover (side cover) 72 to be mounted thereon, the upper side cover 72 may be mounted to the front cover 71 while sufficiently securing the cover strength around the air inlet ports 115.
Furthermore, since the air inlet ports 115 each are provided with the plurality of louvers 115B extending in the lateral direction, the traveling wind may be rectified and introduced to the inside of the front cover 71, so that improvement of the rectifying effect is achieved.

Although the present invention has been described on the basis of the embodiment, the present invention is not limited thereto, and various modifications in design may be made. Although the front cover 71 provided with the lower side 100D on the opening 100 in which the headlight 40 is mounted has been described in the above-described embodiment, for example, the present invention is not limited thereto, and the front cover 71 in which the lower side of the opening 100 is released instead of providing the lower side 100D is also applicable. In this case, the air inlet port 115 may be arranged within the lateral width between the upper ends and the lower ends of the left and right sides 100L, 100R of the opening 100 (within the same area as the area between the lines L1 and L2 in Fig. 5) in the front view of the vehicle.
Although the case in which the present invention is applied to the scooter-type vehicle has been described in this embodiment, the present invention is not limited thereto, and the present invention may be widely applied to the saddle-type vehicle such as other motorcycles having a front cowl including a headlight. For example, the present invention may be applied not only to vehicles driven by an engine, but also to vehicles driven by other driving sources other than the engine, such as a motor.

### [Reference Numerals]

1: motorcycle
40: headlight
40A: light unit
70: vehicle body cover
71: front cover (front cowl)
72: upper side cover (side cover)
100: opening
100H: upper side
100D: lower side
100HL, 100HR: upper side end
100DL, 100DR: lower side end
101L, 100R: recess
101H: projection
110: light mounting side cover portion
111L, 111R: cover portion beside light
115: air inlet port
115A: opening hole
115B: louver
119: flange
119A: side cover mounting portion
120: shield cover (shield portion)
125: shoulder portion
F: vehicle body frame
UE: unit swing engine
WF: front wheel
WR: rear wheel

## Claims

1. A saddle-type vehicle (1) comprising: a front cowl (71) configured to cover the forward of a vehicle body frame (F), a headlight (40) provided in an opening (100) provided at a center of the front cowl (71) in terms of a lateral width thereof, and air inlet ports (115) configured to introduce traveling wind to the inside of the front cowl (71) at positions apart from each other on both left and right sides of the opening (100) of the front cowl (71),
wherein the front cowl integrally includes a shield member (120) configured to guide the traveling wind rearward and upward, and
the air inlet ports (115) are arranged along recesses formed by depressing lower positions of left and right lateral sides (100L, 100R) of the opening inward, the saddle-type vehicle further
comprises side covers (72) to be mounted on left and right sides of the front cowl, the air inlet ports (115) are left and right air inlet ports (115) being positioned inwardly in a widthwise direction of the vehicle with respect to vertical lines extending from left and right ends of an upper side of the opening (100) of the front cowl (71) and being positioned outwardly in the widthwise direction of the vehicle with respect to vertical lines extending from left and right ends of a lower side of the opening (100) of the front cowl (71) in a front view of the vehicle, **characterized in that**
the front cowl (71) includes flanges (119) bent rearward on the left and right sides positioned outsides the air inlet ports (115), and mounting portions configured to allow the respective side cover to be mounted thereon are provided on the respective flanges (119),
and the front cowl comprising a shoulder portion (125) depressing downward on a front surface portion extending from the upper side of the opening (100) of the front cowl (71) to the shield member.

2. The saddle-type vehicle according to Claim 1, comprising a projection (101H) formed by causing a center of the upper side of the opening (100) to project downward, wherein the front cowl (71) extends toward the projection, and a light emitting area of the headlight (40) is formed along the projection (101H).

3. The saddle-type vehicle according to Claim 1 or Claim 2,
wherein the air inlet ports (115) are each provided with a plurality of louvers (115B) extending in the lateral direction.

## Patentansprüche

1. Fahrzeug (1) vom Sattel-Typ, umfassend: eine vordere Abdeckung (71), die dazu konfiguriert ist, den vorderen Bereich von einem Fahrzeugkörperrahmen (F) abzudecken, einen Frontscheinwerfer (40), der in einer Öffnung (100) vorgesehen ist, die an einer Mitte der vorderen Abdeckung (71) in Bezug auf eine seitliche Breite davon vorgesehen ist, und Luft-Einlassöffnungen (115), die dazu konfiguriert sind, Fahrtwind zu der Innenseite der vorderen Abdeckung (71) einzuleiten, an voneinander beanstandeten Positionen sowohl auf der linken als auch auf der rechten Seite von der Öffnung (100) der vorderen Abdeckung (71),
wobei die vordere Abdeckung integral ein Schildelement (120) umfasst, das dazu konfiguriert ist, den Fahrtwind nach hinten und nach oben zu lenken, und
die Luft-Einlassöffnungen (115) entlang von Vertiefungen angeordnet sind, die dadurch gebildet sind, dass untere Positionen von dem linken und rechten Seitenrand (100L, 100R) der Öffnung nach innen eingedrückt sind,
wobei das Fahrzeug vom Satteltyp weiterhin seitliche Abdeckungen (72) umfasst, die an der linken und rechten Seite der vorderen Abdeckung zu montieren sind,
wobei die Luft-Einlassöffnungen (115) linke und rechte Luft-Einlassöffnungen (115) sind, die in einer Breitenrichtung des Fahrzeugs nach innen in Bezug auf vertikale Linien positioniert sind, die sich von linken und rechten Enden einer oberen Seite der Öffnung (100) der vorderen Abdeckung (71) erstrecken, und nach außen in der Breitenrichtung des Fahrzeugs in Bezug auf vertikale Linien positioniert sind, die sich von linken und rechten Enden einer unteren Seite der Öffnung (100) der vorderen Abdeckung (71) in einer Vorderansicht des Fahrzeugs erstrecken,
dadurch gekenntzeichnet, dass die vordere Abdeckung (71) Flansche (119) umfasst, die an den außerhalb der Luft-Einlassöffnungen (115) positionierten linken und rechten Seiten nach hinten gebogen sind, und Montageabschnitte, die dazu konfiguriert sind, zu ermöglichen, dass die jeweilige Seitenabdeckung daran montiert wird, an den jeweiligen Flanschen (119) vorgesehen sind, und die vordere Abdeckung einen Schuiterabschnitt (125) umfasst, der nach unten an einem vorderen Oberflächenabschnitt eingedrückt ist, der sich von dem oberen Rand der Öffnung (100) der vorderen Abdeckung (71) zu dem Schildelement erstreckt.

2. Fahrzeug vom Satteltyp nach Anspruch 1, umfassend einen Vorsprung (101H), der dadurch gebildet ist, dass bewirkt wird, dass eine Mitte des oberen Rands der Öffnung (100) nach unten vorsteht, wobei die vordere Abdeckung (71) sich zu dem Vorsprung hin erstreckt, und ein Licht emittierender Bereich von dem Frontscheinwerfer (40) entlang von dem Vorsprung (101H) ausgebildet ist.

3. Fahrzeug vom Satteltyp-Typ nach Anspruch 1 oder Anspruch 2,
wobei die Luft-EinlassäfFrtungen (115) jeweils mit einer Mehrzahl von Lamellen (115B) versehen sind, die sich in die seitliche Richtung erstrecken.

## Revendications

1. Véhicule de type à selle (1) comprenant : un auvent avant (71) configuré pour couvrir l' avant d'une ossature de caisse de véhicule (F), un phare (40) agencé dans une ouverture (100) agencée au niveau d'un centre de l'auvent avant (71) en termes d'une largeur latérale de ce dernier, et des orifices d'entrée d'air (115) configurées pour introduire du vent de déplacement à l'intérieur de l'auvent avant (71) à des positions éloignées l'une de l'autre sur à la fois les côtés gauche et droit de l'ouverture (100) de l'auvent avant (71),
dans lequel l'auvent avant comprend de façon solidaire un organe de protection (120) configuré pour guider le vent de déplacement vers l'arrière et vers le haut, et
les orifices d'entrée d'air (115) sont agencés le long d'évidements formés en enfonçant des positions inférieures de côtés latéraux gauche et droit (100L, 100R) de l'ouverture vers l'intérieur, le véhicule de type à selle comprenant en outre des capots latéraux (72) à monter sur des côtés gauche et droit de l'auvent avant, les orifices d'entrée d' air (115) sont des orifices d'entrée d'air gauche et droit (115) étant positionnés vers l'intérieur dans une direction de la largeur du véhicule par rapport à des lignes verticales s'étendant depuis des extrémités gauche et droite d'un côté supérieur de l'ouverture (100) de l' auvent avant (71) et étant positionnées vers l'extérieur dans la direction de la largeur du véhicule par rapport à des lignes verticales s'étendant depuis des extrémités gauche et droite d'un côté inférieur de l'ouverture (100) de l'auvent avant (71) dans une vue avant du véhicule, **caractérisé en ce que**
l'auvent avant (71) comprend des brides (119) courbées vers l'arrière sur les côtés gauche et droit positionnées à l'extérieur des orifices d'entrée d'air (115), et des portions de montage configurées pour permettre au capot latéral respectif d'être monté sur ces dernières sont agencées sur les brides respectives (119), et l'auvent avant comprenant une portion d'épaulement (125) s'enfonçant vers le bas depuis une portion de surface avant s'étendant depuis le côté supérieur de l'ouverture (100) de l'auvent avant (71) vers l'organe de protection.

2. Véhicule de type à selle selon la revendication 1, comprenant une saillie (101H) formée en amenant un centre du côté supérieur de l'ouverture (100) à faire saillie vers le bas, dans lequel l'auvent avant (71) s'étend vers la saillie, et une zone d'émission de lumière du phare (40) est formée le long de la saillie (101H).

3. Véhicule de type à selle selon la revendication 1 ou la revendication 2,
dans lequel des orifices d'entrée d'air (115) sont chacun dotés d'une pluralité de fentes (115B) s'étendant dans la direction latérale.
